# EUROPÄISCHE PATENTSCHRIFT

(11) **EP 0 363 864 B1**
(45) Veröffentlichungstag und Bekanntmachung des Hinweises auf die Patenterteilung: **28.07.1993**
(21) Anmeldenummer: 89118695.9
(22) Anmeldetag: 07.10.1989
(51) Int. Cl.: B23D 27/02

(54) **Handgeführter Knabber**
Hand-guided nibbler
Grignoteuse guidée par la main

(30) Priorität: 12.10.1988 DE 3834722
(43) Veröffentlichungstag der Anmeldung: 18.04.1990
(73) Patentinhaber: C. & E. FEIN GMBH & CO., D-70176 Stuttgart (DE)
(72) Erfinder: Mohr, Karl, D-7959 Kleinschafhausen (DE)
(74) Vertreter: Witte, Alexander, Dr.-Ing.

(56) Entgegenhaltungen:
- CH-A- 281 822
- DE-A- 1 810 349
- US-A- 2 217 393

## Beschreibung

Die Erfindung betrifft einen handgeführten Knabber mit einem in einem Antriebskopf eines Maschinengehäuses angeordneten Stößelantrieb, umfassend einen längs einer Stösselachse durch einen Oszillationsantrieb auf- und abbewegbaren Stößel, durch welchen ein mit der Längsachse parallel zur Stößelachse angeordneter Stempel antreibbar ist, mit einer an dem Maschinengehäuse um die Längsachse des Stempels drehbar gelagerten Stempelführung, welche vom Stempel durchsetzt ist, mit einer im Bereich einer Schneide des Stempels angeordneten, eine Schneidrichtung vorgebenden Matrize, welche an der Stempelführung gehalten ist, und mit einem Drehbetätigungsglied zur Verdrehung der Stempelführung.

Durch die DE-A-829 399 ist ein derartiger Knabber bekannt, welcher über einen Exzenter und einen Pleuel einen im Getriebekopf geführten Stößel antreibt, an welchem einstückig der Stempel eingeformt ist. Die Stempelführung ist dabei drehbar an dem Getriebekopf gelagert, wobei zur Verdrehung der Stempelführung ein einen unteren, der Stempelführung zugewandten Teil des Getriebekopfes übergreifender Stellring vorgesehen ist, welcher außerdem noch Rastausnehmungen aufweist, in welche ein am Maschinengehäuse gehaltener Rasthebel eingreift, so daß die Stempelführung in definierten Winkelstellungen festlegbar ist. Die Matrize ist bei dem bekannten Knabber über eine Rippe an der Stempelführung gehalten.

Der Nachteil eines derartigen Knabbers ist darin zu sehen, daß zwischen dem Getriebekopf und einem zu schneidenden Blech ein geringerer Zwischenraum verbleibt, so daß ein Verdrehen des Stellrings z.B. während des Betriebes nur mühsam möglich ist und außerdem die hierzu verwendede Hand die Sicht auf die Matrize und die Schneide des Stempels verdeckt, durch welche eine Schneidrichtung des Knabbers definiert ist. Somit ist eine einfache und vor allem präzise Einstellung der Schneidrichtung des Knabbers nicht möglich.

Durch die DE-A-1 810 349 ist ferner eine Stichsäge bekannt geworden, bei welcher ein Schuh, in welchem das Sägeblatt geführt ist, in verschiedene Winkelstellungen verdrehbar ist.

Die bekannte Stichsäge betrifft einen Gegenstand anderer Gattung als der aus der DE-A-829 399 bekannte Knabber.

Der Erfindung liegt die Aufgabe zugrunde, einen Knabber der gattungsgemäßen Art derart zu verbessern, daß bei diesem in einfacher Weise eine Einstellung einer Schneidrichtung möglich ist.

Dieser Aufgabe wird bei einem Knabber der eingangs beschriebenen Art erfindungsgemäß dadurch gelöst, daß das Drehbetätigungsglied an dem Maschinengehäuse einem der Stempelführung abgewandten Bereich vorgesehen ist, und daß die Stempelführung über ein Zwischenglied durch das Drehbetätigungsglied verdrehbar.

Der Kern der Erfindung ist somit darin zu sehen, daß ein zusätzliches Drehbetätigungsglied vorgesehen ist, welches von der Stempelführung weg an einen dieser abgewandten Bereich des Maschinengehäuses verlegt ist und über ein Zwischenglied auf die Stempelführung wirkt, um diese zu verdrehen.

Als besonders zweckmäßig hat es sich hierbei erwiesen, wenn das Zwischenglied eine außerhalb des Stößelantriebs verlaufende Welle ist, da in diesem Fall der für einen Knabber notwendigerweise stabil ausgebildete Stößelantrieb in unveränderter Form übernommen werden kann.

Das Drehbetätigungsglied selbst kann grundsätzlich an verschiedensten Stellen des Maschinengehäuses angeordnet sein. Beispielsweise wäre es möglich, das Drehbetätigungsglied an einem dem Getriebekopf abgewandten hinteren Ende des Maschinengehäuses oder einer ähnlichen Stelle an diesem vorzusehen. Aus ergonomischen Gründen hat es sich jedoch als besonders günstig erwiesen, wenn das Drehbetätigungsglied an dem Getriebekopf auf einer der Stempelführung gegenüberliegenden Seite angeordnet ist, denn dadurch liegt das Drehbetätigungsglied dann, wenn man davon ausgeht, daß der erfindungsgemäße Knabber mit einer Hand gehalten wird, in einer für einen Zugriff durch die andere Hand günstigen Position.

Insbesondere beim letzten Ausführungsbeispiel ist eine Lösung günstig, bei welcher die Welle im Abstand von der Stößelachse und ungefähr parallel zu dieser verläuft, so daß ein Drehantrieb der Stempelführung in einfacher Weise ohne Beeinträchtigung des Stößelantriebs erfolgen kann.

Als zweckmäßige Lösung hat es sich herausgestellt, wenn das Drehbetätigungsglied konzentrisch zur Längsachse des Stempels angeordnet ist.

Die Lagerung des Zwischengliedes kann grundsätzlich in unterschiedlichster Art und Weise erfolgen. Eine fertigungstechnisch besonders günstige Lösung sieht dabei vor, daß das Zwischenglied in einer Bohrung des Maschinengehäuses geführt ist, so daß die für das Zwischenglied einzubringende Bohrung gleichzeitig auch zumindest zur Führung desselben eingesetzt werden kann.

Damit eine Drehung am Drehbetätigungsglied in einfacher Weise über das Zwischenglied auf die Stempelführung übertragbar ist, ist vorteilhafterweise vorgesehen, daß zwischen dem Drehbetätigungsglied und dem Zwischenglied erste Getriebeelemente und zwischen dem Zwischenglied und der Stempelführung zweite Getriebeelemente vorgesehen sind.

Als besonders günstig für die Betätigung hat sich eine Lösung herausgestellt, bei welcher die ersten und zweiten Getriebeelemente zusammen eine 1:1-Übersetzung bewirken, so daß eine Drehung des Drehbetätigungsglieds um einen bestimmten Winkel eine entsprechende Drehung der Stempelführung um denselben Winkel bewirkt und folglich die Bedienungsperson, ohne nun genau den Stempel und Matrize beobachten zu müssen, abschätzen kann, um welchen Winkel die Schneidrichtung von Stempel und Matrize verdreht wurde.

Bei den bisher beschriebenen Ausführungsbeispielen wurde stets davon ausgegangen, daß die Schneidrichtung durch den Stempel und die Matrize gemeinsam definiert ist. Hierbei ist es aber möglich, daß der Stempel selbst rotationssymmetrisch ausgebildet ist, so daß die Schneidrichtung lediglich durch die mit diesem Stempel zusammenwirkende Matrize vorgegeben ist. Als besonders günstig haben sich jedoch Lösungen erwiesen, bei welchen auch der Stempel zum Schneiden in einer einzigen Schneidrichtung ausgebildet ist und somit zusammen mit der Matrize die Schneidrichtung festlegt.

Bei derartigen Ausführungsformen ist es zweckmäßig, wenn die Stempelführung den Stempel in Richtung seiner Längsachse verschieblich, jedoch gegenüber dieser unverdrehbar führt, so daß durch ein Verdrehen der Stempelführung gleichzeitig eine Mitnahme des Stempels in die entsprechende Schneidrichtung in gleicher Weise wie die Matrize erfolgt.

Dies läßt sich am einfachsten dadurch realisieren, daß der Stempel einen unrunden Querschnitt aufweist.

In allen Fällen, in denen der Stempel gemeinsam mit der Stempelführung verdreht wird, ist dafür Sorge zu tragen, daß diese Drehbewegungen des Stempels dessen Hubbewegungen und vor allem dessen Antrieb in Richtung der Hubbewegungen nicht beeinträchtigen. In diesem Fall ist es zweckmäßig, wenn der Stempel an dem Stößel in einer drehbaren Lagerung gehalten ist, so daß der Stößel seinerseits durch den Oszillationsantrieb in einer unverdrehten Stellung antreibbar ist, während eine Verdrehung des Stempels relativ zu diesem unverdrehbar angeordneten Stößel möglich ist.

Für die drehbare Lagerung des Stempels in dem Stößel hat es sich als vorteilhaft erwiesen, wenn der Stempel in der drehbaren Lagerung Spiel in Richtung der Stößelachse hat, so daß dieser auch während des Betriebs leicht verdreht werden kann.

Eine derartige drehbare Lagerung des Stempels im Stößel läßt sich am einfachsten und kostengünstigsten dadurch erreichen, daß der Stempel einen Bund aufweist und daß die Lagerung den Bund umschließend ausgebildet ist.

Eine derartige Lagerung ist im einfachsten Fall so ausgebildet, daß diese eine den Bund aufnehmende Ausnehmung eines an dem Stößel befestigbaren Lagerteils ist.

Bei den bisher beschriebenen Ausführungsbeispielen wurde nicht im einzelnen darauf eingegangen, wie die Matrize an der Stempelführung gehalten ist.

So ist bei einer bevorzugten Ausführungsform vorgesehen, daß die Matrize an der Stempelführung durch ein Tragelement gehalten ist.

Zweckmäßigerweise ist eine derartige Ausführungsform so ausgebildet, daß die Stempelführung als Tragelement für die Matrize einen Tragstift aufweist.

Zusätzlich kann dieser Tragstift dazu ausgenutzt werden, nicht nur eine bloße Halterung für die Matrize zu bilden sondern gleichzeitig eine sich in Längsrichtung des Stempels erstreckende Führung für diesen darzustellen, gegen welche sich der Stempel zur Aufnahme von gegen die Schneidrichtung auf diese wirkenden Kräften anlegen kann.

Eine besonders vorteilhafte Ausführungsform von Stempel und Tragstift sieht vor, daß der Stempel und der Tragstift gemeinsam in einem Schneidbereich, angrenzend an die Matrize eine ungefähr runde Außenkontur aufweisen, so daß in einfacher Weise ein Drehen dieser Anordnung möglich ist, um die Schneidrichtung zu ändern.

Besonders hinsichtlich des Zusammenbaus hat sich eine Lösung als vorteilhaft erwiesen, bei welcher der Tragstift in die Stempelführung einsetzbar ist.

Diese Lösung sieht zweckmäßigerweise vor, daß der Tragstift ein in die Stempelführung einsetzbares Kopfteil aufweist.

Besonders vorteilhaft ist es, wenn die Stempelführung so ausgebildet ist, daß sie ein in einen Grundkörper einsetzbares Oberteil umfaßt. Das Oberteil kann dabei selbst in den Grundkörper einschraubbar sein oder in anderer Weise, beispielsweise durch zusätzliche Schrauben, mit dem Grundkörper verbindbar sein.

In einem solchen Fall hat es sich als besonders zweckmäßig erwiesen, wenn das Kopfteil des Tragstifts durch das Oberteil in den Grundkörper festlegbar ist, so daß sich hieraus ein besonders einfacher und vorteilhafter Zusammenbau der Stempelführung ergibt.

Ferner kann bei einer in ein Oberteil und einen Grundkörper aufgeteilten Stempelführung vorgesehen sein, daß das Oberteil als ein Element der zweiten Getriebeelemente ausgebildet ist, so daß dieses mit dem Zwischenglied zur Bildung der zweiten Getriebeelemente zusammenwirkt.

Als Alternative dazu, für das Halten der Matrize einen Tragstift vorzusehen, ist es ebenfalls möglich, wenn das Tragelement an die Stempelführung angeformt ist.

Bei allen bisher beschriebenen Ausführungsbeispielen wurde nicht im einzelnen darauf eingegangen, wie der Oszillationsantrieb des Stößelantriebs auszusehen hat. Beispielsweise könnte dies ein Nocken sein. Als besonders günstig hat es sich jedoch erwiesen, wenn der Oszillationsantrieb einen Pleuelantrieb umfaßt.

Da ein derartiger, einen Pleuelantrieb umfassender Oszillationsantrieb von der Baugröße und von der erforderlichen Lagerung einen erheblichen Platzbedarf hat, hat es sich als zweckmäßig erwiesen, wenn die Welle antriebsseitig des Pleuelantriebs angeordnet ist.

Bei allen bisherigen Ausführungsbeispielen wurde nichts darüber ausgesagt, ob die Stempelführung in ihrer jeweiligen Drehstellung verdrehsicher gehalten werden soll oder nicht. Aus diesem Grund ist bei einem Ausführungsbeispiel der erfindungsgemäßen Lösung vorteilhafterweise vorgesehen, daß die Stempelführung durch eine Rasteinrichtung gegen eine Verdrehung gesichert ist, wobei dies im einfachsten Fall so aussehen kann, daß die Stempelführung eine Rastverzahnung aufweist, in welche ein federbeaufschlagtes Rastelement eingreift, so daß jeweils durch Drehen am Drehbetätigungsglied dieses Rastelement aus der jeweiligen Rastverzahnung gegen die Kraft der Feder herausbewegt werden muß.

Als Alternative hierzu ist es aber ebenfalls denkbar, daß die ersten oder die zweiten Getriebeelemente als selbstsperrende Getriebeelemente ausgebildet sind, so daß eine von Seiten der Stempelführung auf diese wirkende Drehkraft zum Blockieren der Getriebeelemente führt, während diese bei einem Drehen am Drehbetätigungsglied nicht sperren.

Weitere Merkmale und Vorteile der vorliegenden Erfindung sind Gegenstand der nachfolgenden Beschreibung sowie der zeichnerischen Darstellung einiger Ausführungsbeispiele. In der Zeichnung zeigen:
- Fig. 1: eine perspektivische Gesamtansicht eines ersten Ausführungsbeispiels;
- Fig. 2: einen Schnitt längs Linie 2-2 in Fig. 1;
- Fig. 3: einen Schnitt längs Linie 3-3 in Fig. 2;
- Fig. 4: einen Schnitt längs Linie 4-4 in Fig.3;
- Fig. 5: einen Schnitt längs Linie 5-5 in Fig.3;
- Fig. 6: eine vergrößerte Darstellung eines zweiten Ausführungsbeispiels in einer Ansicht ähnlich Fig. 2 und
- Fig. 7: einen Schnitt längs Linie 7-7 in Fig. 6.

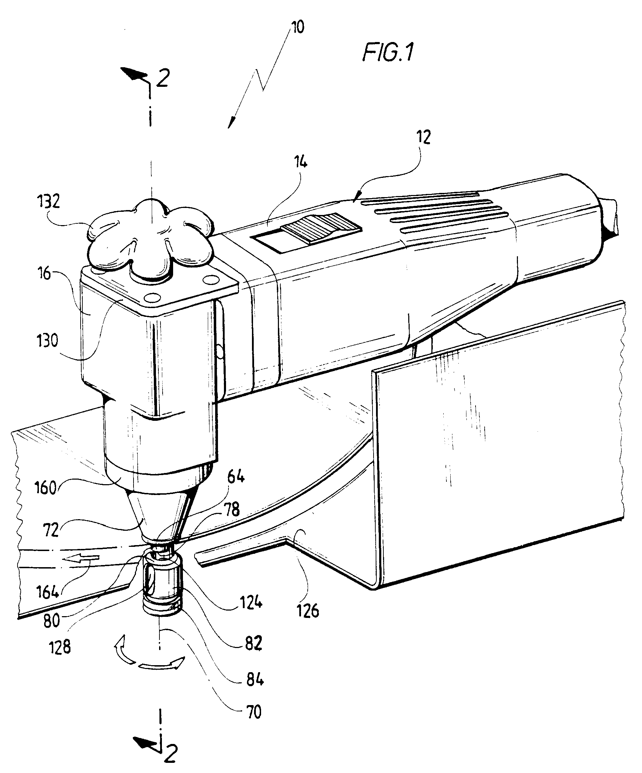

Ein erstes, in Fig. 1 als Ganzes mit 10 bezeichnetes Ausführungsbeispiel eines erfindungsgemäßen Knabbers umfaßt ein Maschinengehäuse 12, welches ein Motorgehäuse 14 und eine an dieses angesetzten Getriebekopf 16 aufweist.

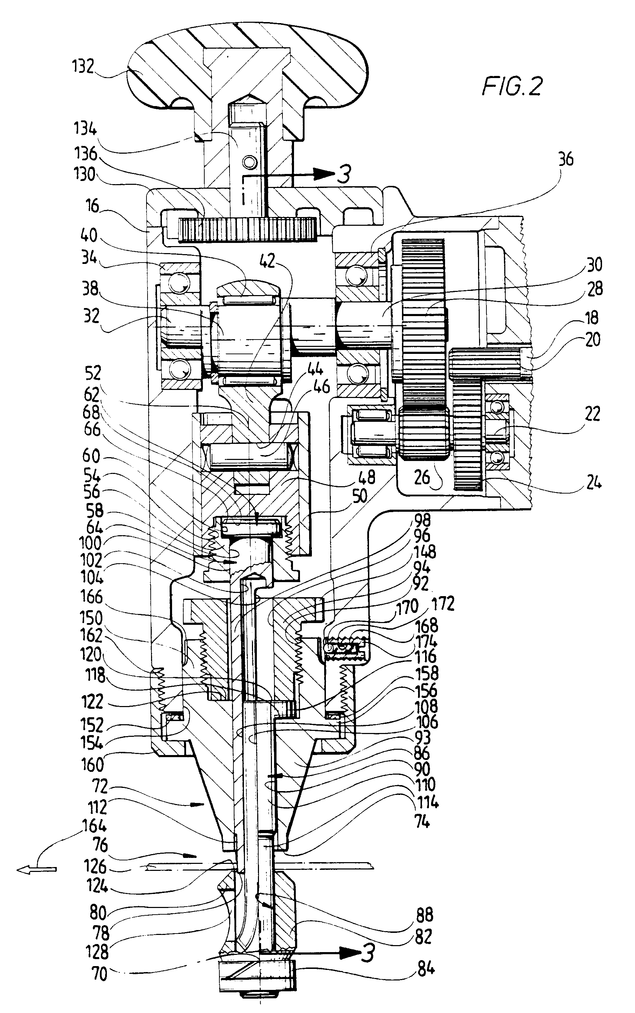

Wie in Fig. 2 dargestellt, treibt ein im Motorgehäuse 14 angeordneter Motor über ein auf einer Motorwelle 18 angeordnetes Antriebsritzel 20 ein auf einer Getriebewelle 22 gelagertes erstes Getriebezahnrad 24, welches über ein mit diesem drehfest verbundenes zweites Getriebezahnrad 26 ein drittes Getriebezahnrad 28 treibt, das seinerseits auf einer Exzenterwelle 30 sitzt. Das Antriebsritzel 20 sowie das erste Getriebezahnrad 24, das zweite Getriebezahnrad 26 und das dritte Getriebezahnrad 28 sind dabei so dimensioniert, daß die Exzenterwelle 30 in bezug auf die Motorwelle 18 mit einer Untersetzung angetrieben ist. Die Exzenterwelle 30 ist an einem dem dritten Getriebezahnrad 28 abgewandten vorderen Ende 32 in einem vorderen Lager 34 gehalten und außerdem zwischen dem vorderen Ende 32 und dem dritten Getriebezahnrad 28 und dicht bei letzterem in einem hinteren Lager 36, wobei sowohl das vordere Lager 34 als auch das hintere Lager 36 bevorzugterweise Wälzlager sind.

Zwischen dem vorderen Lager 34 und dem hinteren Lager 36 ist ein Exzenter 38 angeordnet, an welchem über ein Nadellager 40 ein Pleuel 42 angreift. Dieser Pleuel 42 ist seinerseits mit seinem dem Nadellager 40 abgewandten Ende über einen eine Pleuelbohrung 44 durchsetzenden Pleuelbolzen 46 gelenkig an einem Stößel 48 gehalten, welcher seinerseits geführt in einer in den Getriebekopf 16 eingesetzten Führungsbüchse 50 in Richtung einer senkrecht zur Exzenterwelle 30 verlaufenden Stößelachse 52 in dem Getriebekopf 16 in der Art eines Kolbens auf- und abbewegbar ist.

Der Stößel 48 weist auf seiner dem Pleuel 42 gegenüberliegenden unteren Seite eine Sackbohrung 54 auf, in welche eine Stempelschraube 56 einschraubbar ist.

Diese Stempelschraube 56 ist mit einer diese in Richtung ihrer Längsachse und somit parallel zur Stößelachse 52 durchsetzenden Führungsbohrung 58 versehen, welche sich an ihrem dem Stößel 48 zugewandten Ende zu einer Aufnahme 60 für einen Stempelkopf 62 erweitert.

Ein als Ganzes mit 64 bezeichneter Stempel durchsetzt die Führungsbohrung 58 von unten her und ist im Bereich des Stempelkopfes 62 mit einem Bund 66 versehen, welcher in der Aufnahme 60 liegt. Die Aufnahme 60 ist dabei so ausgebildet, daß der Stempel 64 mit diesem nicht durch die Führungsbohrung 58 hindurch nach unten aus der Aufnahme 60 herausgleiten kann. Ferner ist die Aufnahme 60 so bemessen, daß der Bund 66 in Richtung der Stößelachse 52 bei vollständig in die Sackbohrung 54 eingeschraubter und an einem Boden 68 derselben anliegender Stempelschraube 56 noch Spiel in Richtung der Stößelachse 52 hat, d.h. daß die Aufnahme 60 in Richtung der Stößelachse 52 eine größere Erstreckung als der Bund 66 hat, so daß zwischen dem Boden 68 und dem Stempelkopf 62 bei voll in der Aufnahme 60 aufsitzendem Bund ein geringer Abstand in der Größe des Spiels verbleibt.

Der Stempel 64 erstreckt sich von seinem Stempelkopf 62 in Richtung seiner koaxial zur Stößelachse 52 verlaufenden Längsachse 70 nach unten und durchsetzt dabei eine als Ganzes mit 72 bezeichnete Stempelführung, so daß er über ein unteres Ende 74 der Stempelführung 72 in einen Schneidbereich 76 übersteht. Ein dem Stempelkopf 62 gegenüberliegendes Ende des Stempels 64 ist dabei mit einer Schneide 78 versehen, welche so ausgebildet ist, daß sie mit einer dieser zugewandten und auf einer der Stempelführung 72 gegenüberliegenden Seite des Schneidbereichs 76 angeordneten Matrize 80 zusammenwirkt, wobei eine Form der Matrize 80 der Form der Schneide 78 des Stempels 64 angepaßt ist. Die Matrize 80 ist dabei an einem Matrizenträger 82 angeordnet, welcher mit einer Befestigungsschraube 84 an einem parallel zum Stempel 64 verlaufenden und sich in die Stempelführung 72 hinein erstreckenden Tragstift 86 gehalten ist. Der Tragstift 86 durchsetzt dabei eine den gesamten Matrizenträger 82 in Richtung der Längsachse 70 durchsetzende Längsbohrung 88 und dringt in eine Zentralbohrung 90 in einem Grundkörper 93 der Stempelführung 72 ein, welche koaxial zur Längsachse 70 und somit auch koaxial zur Stößelachse 52 verläuft. Diese Zentralbohrung 90 erweitert sich zum Stößel 48 hin zu einer ebenfalls zur Längsachse 70 konzentrischen Gewindebohrung 92, in welche ein Oberteil 94 der Stempelführung 72 einschraubbar ist. Dieses Oberteil 94 ist ebenfalls mit einer zur Längsachse 70 koaxialen Zentralbohrung 96 versehen, welche der Stempel 64 durchsetzt.

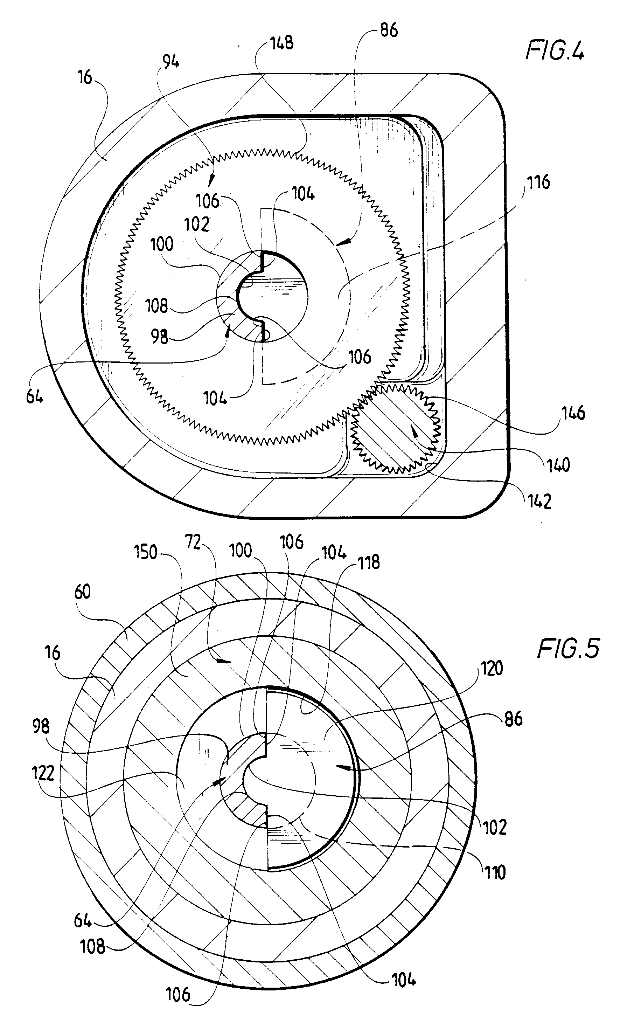

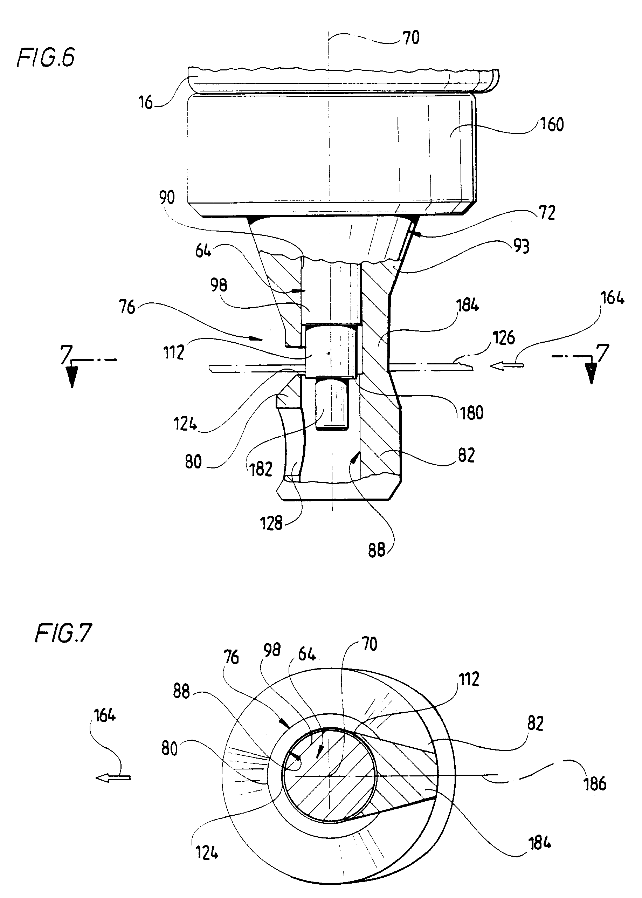

Der Stempel 64 ist im Bereich des Stempelkopfes 62, d.h. des Bundes 66, und seines die Führungsbohrung 58 durchsetzenden Teils, zylindrisch ausgebildet und koaxial zur Längsachse 70 angeordnet. In einem sich von dem Stempelkopf 62 bis zur Schneide 78 erstreckenden Stempelschaft 98 hat der Stempel 64 einen halbkreisringförmigen Querschnitt, d.h. daß der Stempelschaft 98, wie in Fig. 4 und 5 dargestellt, durch eine äußere Zylinderfläche 100, eine einen kleineren Radius als die äußere Zylinderfläche 100 aufweisende und zur äußeren koaxiale innere Zylinderfläche 102 sowie zwischen diesen Zylinderflächen 100 und 102 durch radial zur Achse beider Zylinderflächen 100 und 102 verlaufende und auf einem Durchmesser liegende Flächen 104 begrenzt ist. Die Achsen beider Zylinderflächen 100 und 102 liegen dabei koaxial zur Längsachse 70, so daß der Stempelschaft 98 insgesamt die Form eines halben zur Längsachse 70 koaxialen Hohlzylinders aufweist.

Soweit der Stempelschaft 98 längs des Tragstifts 86 verläuft, liegt dieser mit seinen Flächen 104 sowie der zwischen dieser liegenden inneren Zylinderfläche 102 an diesen Flächen angepaßten Führungsflächen 106 bzw. 108 an, wobei letztere die Form eines halben Zylinders aufweist, an welche sich nach außen hin in Fortsetzung eines Durchmessers dieses Halbzylinders an die Führungsflächen 106 anschließen. Der Tragstift 86 ist dabei mit seinem die Zentralbohrung 90 durchsetzenden Teilstück so ausgebildet, daß dieses eine zylindrisch mit demselben Radius wie die äußere Zylinderfläche 100 geformte Außenfläche 110 aufweist und damit letztere zur Mantelfläche eines zur Längsachse 70 koaxialen Zylinders ergänzt.

Desgleichen ergänzen sich eine äußere Zylinderfläche 112 des Stempelschafts 98 und eine Außenfläche 114 des Tragstifts 86 im Schneidbereich 76 mit dem einzigen Unterschied, daß diese einen kleineren Radius als die äußere Zylinderfläche 100 und die Außenfläche 110 aufweisen.

Zu seiner Befestigung in der Stempelführung 72 ist der Tragstift 86 an seinem, dem Matrizenträger 82 gegenüberliegenden Ende mit einem ebenfalls bezüglich der Längsachse 70 halbkreisförmigen Tragstiftkopf 116 versehen, welcher in einer diesem entsprechenden halbkreisförmigen Vertiefung 118 liegt, welche sich an die Gewindebohrung 92 anschließt. Die Vertiefung 118 ist dabei so bemessen, daß eine Oberseite 120 des Tragstiftkopfes 116 mit einem Boden 122 der Gewindebohrung 92 abschließt, so daß das in die Gewindebohrung 92 eingeschraubte Oberteil 94 den Tragstiftkopf 116 in die Vertiefung 118 fest eindrückt.

Der Tragstift 86 bildet somit zusammen mit der Stempelführung 72 eine Einheit, welche zwischen der Zentralbohrung 90, die der äußeren Zylinderfläche 100 des Stempelschafts 98 angepaßt ist, und den Führungsflächen 106 und 108 einen im Querschnitt halbkreisförmig begrenzten Führungskanal für den Stempelschaft 98 bildet, so daß letzterer in Richtung der Längsachse 70 verschieblich, bezüglich dieser jedoch drehfest in der Stempelführung 72 gehalten ist.

Der Matrizenträger 82 ist an dem Tragstift 86 so angeordnet, daß die Schneide 78 des Stempels 64 in ihrer unteren Endstellung unterhalb eines Schneidrandes 124 der Matrize 80 liegt. Der Schneidrand 124 ist dabei ebenfalls der Außenform des Stempelschaftes 98 im Schneidbereich angepaßt, so daß zwischen diesem und dem Tragstift 86, d.h. dessen Führungsflächen 106 und 108, ein halbkreisringförmiger Zwischenraum verbleibt, in welchen der Stempel unter Zusammenwirken der Schneide 78 mit dem Schneidrand 124 aus einem Blech 126 ausgestanzte Stücke einschiebt.

Dieser halbkreisringförmige Zwischenraum erstreckt sich vom Schneidrand 124 nach unten bis zu einer in die Längsbohrung 88 einmündenden Auswurföffnung 128, welche so dimensioniert ist, daß sie sich über die gesamte Breite des halbkreisförmigen Zwischenraums erstreckt, so daß die in diesem nach unten geschobenen ausgestanzten Blechstücke aus der Auswurföffnung 128 austreten können.

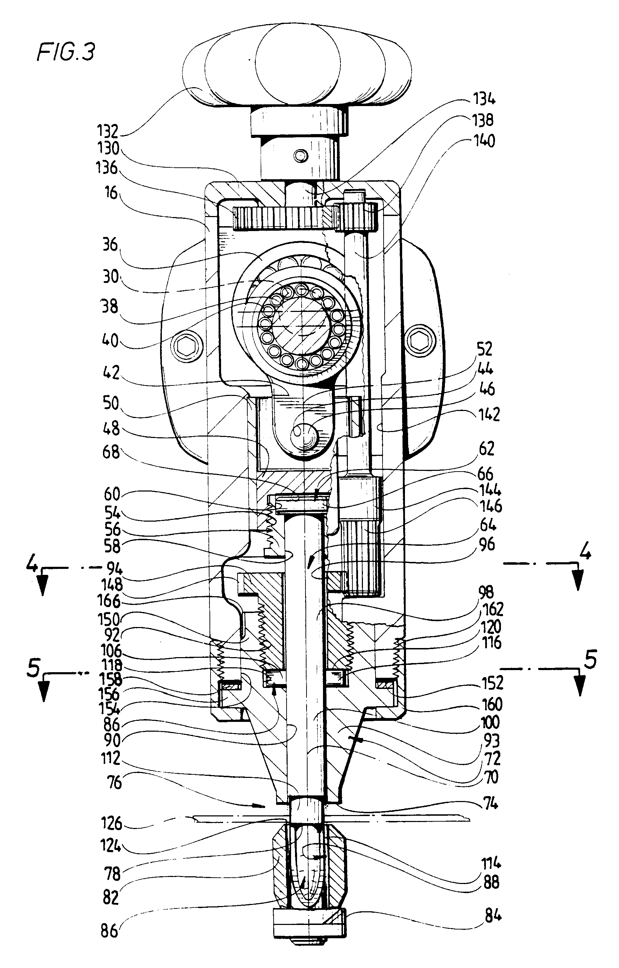

Wie aus Fig. 2 und 3 zu entnehmen, ist an einem der Stempelführung 72 gegenüberliegend angeordneten Deckel 130 des Getriebekopfes 16 ein koaxial zur Stoßelachse 52 angeordneter Sterngriff 132 vorgesehen, welcher mit einem an diesem drehfest gehaltenen Wellenstummel 134 den Deckel 130 durchsetzt, wobei der Wellenstummel 134 ein auf einer Innenseite des Deckels 130 anliegendes Zahnrad 136 trägt. Das Zahnrad 136 ist dabei durch den Sterngriff 132 verdrehbar. Mit diesem Zahnrad 136 ist ein Ritzel 138 einer Welle 140 angetrieben, welche parallel zur Stößelachse 52 seitlich der Führungsbüchse 50 des Stößels 48 und ungefähr in Höhe zwischen dem Exzenter 38 und dem hinteren Lager 36 in dem Getriebekopf 16 verläuft und sich ungefähr in Höhe der Führungsbüchse 50 durch eine Führungsbohrung 142 hindurcherstreckt. Die Welle 140 ist einerseits in einer Bohrung im Deckel 130 und andererseits in der Führungsbohrung 142 durch eine zylindrische Verdickung 144 drehbar gelagert. An diese Verdickung 144 schließt sich eine, einen geringfügig kleineren Durchmesser als diese aufweisende Endverzahnung 146 der Welle 140 an, welche mit einer Außenverzahnung 148 des Oberteils 94 in Eingriff steht.

Die Stempelführung 72 ist ihrerseits mit einem zylindrischen Ansatz 150 in einer sich an eine untere Stirnseite 152 des Getriebekopfs 16 anschließenden Bohrung 154 im Getriebekopf 16 gelagert, wobei ein die untere Stirnseite 152 übergreifender Flansch 156 sich über eine Kugellagerausgleichsscheibe 158 an dieser abstützt. Der Flansch 156 ist seinerseits durch eine Überwurfmutter 160 mit der Kugellagerausgleichsscheibe 158 gegen die untere Stirnseite 152 angelegt, wobei der Flansch 156 in der Überwurfmutter 160 drehbar ist. Die Überwurfmutter 160 ist außerdem ihrerseits auf ein Außengewinde 162 des Getriebekopfs 16 aufgeschraubt, welches sich an die untere Stirnseite 152 nach oben anschließt. Somit ist die Überwurfmutter 160 mit dem Getriebekopf 16 fest verbunden.

Das Ausführungsbeispiel funktioniert nun folgendermaßen: Durch Drehen des Sterngriffs 132 erfolgt ein Drehen des Zahnrads 136 und damit ein Drehen des Ritzels 138 und somit der Welle 140, welche über ihre Endverzahnung 146 die Außenverzahnung 148 des Oberteils 94 antreibt. Das Zahnrad 136, das Ritzel 138, die Endverzahnung 146 und die Außenverzahnung 148 sind dabei so dimensioniert, daß das Oberteil 94 mit einer 1:1-Übersetzung durch den Steuergriff 132 angetrieben ist.

Durch die feste Verbindung zwischen dem Oberteil 94 und dem Grundkörper 93 der Stempelführung 72 erfolgt ein Verdrehen des Tragstifts 86 unter gleichzeitigem Verdrehen der Matrize 80 sowie des Stempelschaftes 98, welches dadurch möglich ist, daß der Stempelkopf 62 drehbar in der Aufnahme 60 der Stempelschraube 56 gehalten ist.

Somit kann durch Drehen am Sterngriff 132 eine Schneidrichtung 164, welche senkrecht auf den Flächen 106 steht, in einem Winkelbereich von 360° verschwenkt werden.

Um eine Arretierungswirkung zu erreichen, ist der zylindrische Ansatz 150 mit einer Verzahnung 166 versehen, in welche ein sich über eine Feder 168 abstützendes Rastelement 170 eingreift, wobei das Rastelement 170 und die Feder 168 in einer Bohrung 172 einer Rastschraube 174 liegen, die ihrerseits quer zur Längsachse 70 in den Getriebekopf 16 eingeschraubt ist.

Das Schneiden mit diesem Knabber erfolgt dabei in bekannter Weise durch eine Auf- und Abbewegung des Stempels 64 und Ausstanzen von Blechstücken durch Zusammenwirken der Schneide 78 des Stempels 64 und des Schneidrandes 124 der Matrize 80.

Bei einem zweiten Ausführungsbeispiel der erfindungsgemässen Lösung, dargestellt in den Fig. 6 und 7 , sind, insoweit als identische Teile Verwendung finden, diese mit denselben Bezugszeichen versehen. Bezüglich deren Beschreibung wird auf die Ausführungen zu den ersten Ausführungsbeispielen verwiesen.

Im Gegensatz zum ersten Ausführungsbeispiel ist hierbei der Stempel 64 mit einer bezüglich der Längsachse 70 rotationssymmetrischen Schneide 180 versehen. Außerdem trägt der Stempel 64 einen über die Schneide 180 nach unten überstehenden, zur Längsachse 70 koaxialen zylindrischen Fortsatz 182, welcher so bemessen ist, daß er länger als der Schneidbereich 76 zwischen einer Unterseite der Stempelführung 82 und dem Schneidrand 124 ist. Der Matrizenträger 82 ist dabei über eine einstückig an diesen sowie an die Stempelführung 72 angeformte Rippe 184 gehalten, wobei sich die Rippe 184, ausgehend von einer Breite entsprechend ungefähr einem Durchmesser des Stempels 64, im Schneidbereich 76 mit zunehmendem Abstand entgegengesetzt zur Schneidrichtung 164 verjüngt.

Die Schneidrichtung 164 liegt in einer durch die Achse 70 hindurchgehenden Mittelebene 186 der Rippe 184 und steht außerdem senkrecht auf der Längsachse 70.

Der Schneidrand 124 erstreckt sich beiderseits der Schneidrichtung 164 als kreisförmige Begrenzungslinie der Matrize 80 bis zur Rippe 184.

Aufgrund des mit einer zur Längsachse 70 rotationssymmetrischen Schneide 180 versehenen Stempels 164 ist ein Drehen desselben nicht notwendig, so daß sich eine drehbare Lagerung des Stempels 64 in dem Stößel 48 erübrigt. Dagegen wird durch Drehen am Sterngriff 132 mit der Stempelführung 72 über die Rippe 184 auch der Matrizenträger 82 mitgedreht, so daß auch bei diesem Ausführungsbeispiel die Schneidrichtung 164 in einem Winkelbereich von 360° um die Längsachse 70 drehbar ist.

## Patentansprüche

1. Handgeführten Knabber mit einem in einem Antriebskopf eines Maschinengehäuses angeordneten Stößelantrieb, umfassend einen längs einer Stösselachse durch einen Oszillationsantrieb (18, 20, 22, 24, 26, 28, 30, 38) auf- und abbewegbaren Stößel (48), durch welchen ein mit der Längsachse parallel zur Stößelachse (52) angeordneter Stempel (64) antreibbar ist, mit einer an dem Maschinengehäuse (12) um die Längsachse des Stempels (64) drehbar gelagerten Stempelführung (72), welche vom Stempel (64) durchsetzt ist, mit einer im Bereich einer Schneide (78) des Stempels (64) angeordneten, eine Schneidrichtung vorgebenden Matrize (80), welche an der Stempelführung (72) gehalten ist, und mit einem Drehbetätigungsglied (132) zur Verdrehung der Stempelführung, dadurch gekennzeichnet, daß das Drehbetätigungsglied (132) an dem Maschinengehäuse (12) in einem der Stempelführung (72) abgewandten Bereich vorgesehen ist, und daß die Stempelführung (72) über ein Zwischenglied (140) durch das Drehbetätigungsglied (132) verdrehbar ist.

2. Knabber nach Anspruch 1, dadurch gekennzeichnet, daß das Zwischenglied eine außerhalb des Stößelantriebs (38, 42) verlaufende Welle (140) ist.

3. Knabber nach Anspruch 1 oder 2, dadurch gekennzeichnet, daß das Drehbetätigungsglied (132) an dem Getriebekopf (16) auf einer der Stempelführung (72) gegenüberliegenden Seite (130) angeordnet ist.

4. Knabber nach einem der Ansprüche 2 oder 3, dadurch gekennzeichnet, daß die Welle (140) im Abstand von der Stößelachse (52) und ungefähr parallel zu dieser verläuft.

5. Knabber nach einem der Ansprüche 3 oder 4, dadurch gekennzeichnet, daß das Drehbetätigungsglied (132) konzentrisch zur Längsachse (70) des Stempels (64) angeordnet ist.

6. Knabber nach einem der voranstehenden Ansprüche, dadurch gekennzeichnet, daß das Zwischenglied (140) in einer Bohrung (142) des Maschinengehäuses (12, 16) geführt ist.

7. Knabber nach einem der voranstehenden Ansprüche, dadurch gekennzeichnet, daß zwischen dem Drehbetätigungsglied (132) und dem Zwischenglied (140) erste Getriebeelemente (136, 138) und zwischen dem Zwischenglied (140) und der Stempelführung (72) zweite Getriebeelemente (146, 148) vorgesehen sind.

8. Knabber nach Anspruch 7, dadurch gekennzeichnet, daß die ersten und zweiten Getriebeelemente (136, 138, 146, 148) zusammen eine 1:1-Übersetzung bewirken.

9. Knabber nach einem der voranstehenden Ansprüche, dadurch gekennzeichnet, daß der Stempel (64) zum Schneiden in einer einzigen Schneidrichtung (164) ausgebildet ist.

10. Knabber nach Anspruch 9, dadurch gekennzeichnet, daß die Stempelführung (72) den Stempel (64) in Richtung seiner Längsachse (70) verschieblich, jedoch gegenüber dieser unverdrehbar führt.

11. Knabber nach Anspruch 10, dadurch gekennzeichnet, daß der Stempel (64) einen unrunden Querschnitt aufweist.

12. Knabber nach einem der Ansprüche 9 bis 11, dadurch gekennzeichnet, daß der Stempel (64) an dem Stößel (48) in einer drehbaren Lagerung (60) gehalten ist.

13. Knabber nach Anspruch 12, dadurch gekennzeichnet, daß der Stempel (64) in der drehbaren Lagerung (60) Spiel in Richtung der Stößelachse (52) hat.

14. Knabber nach Anspruch 12 oder 13, dadurch gekennzeichnet, daß der Stempel (64) einen Bund (66) aufweist und daß die Lagerung (60) den Bund (66) umschliessend ausgebildet ist.

15. Knabber nach Anspruch 14, dadurch gekennzeichnet, daß die Lagerung eine den Bund (66) aufnehmende Ausnehmung (60) eines an dem Stößel befestigbaren Lagerteils (56) ist.

16. Knabber nach einem der voranstehenden Ansprüche, dadurch gekennzeichnet, daß die Matrize (80) an der Stempelführung (72) durch ein Tragelement (86, 184) gehalten ist.

17. Knabber nach Anspruch 16, dadurch gekennzeichnet, daß die Stempelführung (72) als Tragelement für die Matrize (80) einen Tragstift (86) aufweist.

18. Knabber nach Anspruch 17, dadurch gekennzeichnet, daß der Tragstift (86) eine sich in Längsrichtung (70) des Stempels (64) erstreckende Führung für den Stempel (74) bildet.

19. Knabber nach Anspruch 17 oder 18, dadurch gekennzeichnet, daß der Stempel (64) und der Tragstift (86) gemeinsam in einem Schneidbereich (76) angrenzend an die Matrize (80) eine ungefähr runde Außenkontur aufweisen.

20. Knabber nach einem der Ansprüche 17 bis 19, dadurch gekennzeichnet, daß der Tragstift (86) in die Stempelführung (72) einsetzbar ist.

21. Knabber nach einem der Ansprüche 17 bis 20, dadurch gekennzeichnet, daß der Tragstift (86) ein in die Stempelführung einsetzbares Kopfteil (116) aufweist.

22. Knabber nach einem der voranstehenden Ansprüche, dadurch gekennzeichnet, daß die Stempelführung (72) ein in einen Grundkörper (93) einsetzbares Oberteil (94) umfaßt.

23. Knabber nach Anspruch 22, dadurch gekennzeichnet, daß das Kopfteil (116) des Tragstifts (86) durch das Oberteil (94) in dem Grundkörper (93) festlegbar ist.

24. Knabber nach einem der Ansprüche 22 oder 23, dadurch gekennzeichnet, daß das Oberteil (94) als ein Element (148) der zweiten Getriebeelemente (146, 148) ausgebildet ist.

25. Knabber nach einem der Ansprüche 1 bis 16, dadurch gekennzeichnet, daß das Tragelement (184) an die Stempelführung (72) angeformt ist.

26. Knabber nach einem der voranstehenden Ansprüche, dadurch gekennzeichnet, daß der Oszillationsantrieb einen Pleuelantrieb (38, 42) aufweist.

27. Knabber nach Anspruch 26, dadurch gekennzeichnet, daß die Welle (140) antriebsseitig des Pleuelantriebs (38, 42) angeordnet ist.

28. Knabber nach einem der voranstehenden Ansprüche, dadurch gekennzeichnet, daß die Stempelführung (72 durch eine Rasteinrichtung (166, 168, 170) gegen eine Verdrehung gesichert ist.

## Claims

1. Hand-controlled nibbler, with a plunger drive arranged in a drive head of a machine housing, comprising a plunger (48) which is movable up and down along a plunger axis by means of an oscillating drive (18, 20, 22, 24, 26, 28, 30, 38) and by means of which a punch (64) arranged with the longitudinal axis parallel to the plunger axis (52) can be driven, with a punch guide (72) which is mounted on the machine housing (12) rotatably about the longitudinal axis of the punch (64) and through which the punch (64) passes, with a die (80) which is arranged in the region of a cutter (78) of the punch (64) and predetermines a cutting direction and which is held on the punch guide (72), and with a rotary actuating member (132) for rotating the punch guide, characterised in that the rotary actuating member (132) on the machine housing (12) is provided in a region facing away from the punch guide (72), and in that the punch guide (72) is rotatable by the rotary actuating member (132) via an intermediate member (140).

2. Nibbler according to Claim 1, characterised in that the intermediate member is a shaft (140) extending outside the plunger drive (38, 42).

3. Nibbler according to Claim 1 or 2, characterised in that the rotary actuating member (132) is arranged on the gear head (16) on a side (130) located opposite the punch guide (72).

4. Nibbler according to one of Claims 2 or 3, characterised in that the shaft (140) extends at a distance from the plunger axis (52) and approximately parallel to this.

5. Nibbler according to one of Claims 3 or 4, characterised in that the rotary actuating member (132) is arranged concentrically to the longitudinal axis (70) of the punch (64).

6. Nibbler according to one of the preceding claims, characterised in that the intermediate member (140) is guided in a bore (142) of the machine housing (12, 16).

7. Nibbler according to one of the preceding claims, characterised in that first gear elements (136, 138) are provided between the rotary actuating member (132) and the intermediate member (140) and second gear elements (146, 148) between the intermediate member (140) and the punch guide (72).

8. Nibbler according to Claim 7, characterised in that the first and second gear elements (136, 138, 146, 148) together bring about a 1:1 transmission.

9. Nibbler according to one of the preceding claims, characterised in that the punch (64) is designed for cutting in a single cutting direction (164).

10. Nibbler according to Claim 9, characterised in that the punch guide (72) guides the punch (64) displaceably in the direction of its longitudinal axis (70), but non-rotatably relative to this.

11. Nibbler according to Claim 10, characterised in that the punch (64) has a non-round cross-section.

12. Nibbler according to one of Claims 9 to 11, characterised in that the punch (64) is held on the plunger (48) in a rotatable mounting (60).

13. Nibbler according to Claim 12, characterised in that the punch (64) has play in the direction of the plunger axis (52) in the rotatable mounting (60).

14. Nibbler according to Claim 12 or 13, characterised in that the punch (64) has a collar (66), and in that the mounting (60) is designed to surround the collar (66).

15. Nibbler according to Claim 14, characterised in that the mounting is a recess (60) of a bearing part (56) fastenable to the plunger, said recess (60) receiving the collar (66).

16. Nibbler according to one of the preceding claims, characterised in that the die (80) is held on the punch guide (72) by a supporting element (86, 184).

17. Nibbler according to Claim 16, characterised in that the punch guide (72) has a supporting pin (86) as a supporting element for the die (80).

18. Nibbler according to Claim 17, characterised in that the supporting pin (86) forms a guide for the punch (74) which extends in the longitudinal direction (70) of the punch (64).

19. Nibbler according to Claim 17 or 18, characterised in that the punch (64) and the supporting pin (86) jointly have an approximately round outer contour in a cutting region (76) adjacent to the die (80).

20. Nibbler according to one of Claims 17 to 19, characterised in that the supporting pin (86) is insertable into the punch guide (72).

21. Nibbler according to one of Claims 17 to 20, characterised in that the supporting pin (86) has a head part (116) insertable into the punch guide.

22. Nibbler according to one of the preceding claims, characterised in that the punch guide (72) comprises an upper part (94) insertable into a basic body (93).

23. Nibbler according to Claim 22, characterised in that the head part (116) of the supporting pin (86) can be fixed in the basic body (93) by means of the upper part (94).

24. Nibbler according to one of Claims 22 or 23, characterised in that the upper part (94) is designed as an element (148) of the second gear elements (146, 148).

25. Nibbler according to one of Claims 1 to 16, characterised in that the supporting element (184) is formed on the punch guide (72).

26. Nibbler according to one of the preceding claims, characterised in that the oscillating drive has a connecting-rod drive (38, 42).

27. Nibbler according to Claim 26, characterised in that the shaft (140) is arranged on the driving side of the connecting-rod drive (38, 42).

28. Nibbler according to one of the preceding claims, characterised in that the punch guide (72) is secured against rotation by a catch device (166, 168, 170)

## Revendications

1. Grignoteuse à main avec un entraînement à coulisseau monté dans une tête d'entraînement d'un carter de machine, comprenant un coulisseau (48) pouvant être déplacé de manière ascendante et descendante le long d'un axe de coulisseau par un entraînement oscillant (18, 20, 22, 24, 26, 28, 30, 38), par lequel un poinçon (64) monté avec son axe longitudinal parallèle à l'axe du coulisseau (52) peut être entraîné, avec un guidage de poinçon (72), lequel est traversé par le poinçon (64), le guidage de poinçon étant monté rotatif sur le carter de machine (12) autour de l'axe longitudinal du poinçon (64), avec une matrice (80) montée dans la région d'une lame (78) du poinçon (64), et donnant une direction de coupe, laquelle est maintenue sur le guidage de poinçon (72), et avec un organe d'actionnement en rotation (132) pour provoquer la rotation du guidage de poinçon (72), **caractérisée en ce que** l'organe d'actionnement en rotation (132) est prévu sur le carter de machine (12) dans une région opposée au guidage de poinçon (72), et en ce que le guidage de poinçon (72) est apte à être entraîné en rotation, par l'intermédiaire d'un organe intermédiaire (140), par l'organe d'actionnement en rotation (132).

2. Grignoteuse selon la revendication 1, caractérisée en ce que l'organe intermédiaire est un arbre (140) situé en dehors de l'entraînement à coulisseau (38, 42).

3. Grignoteuse selon la revendication 1 ou 2, caractérisée en ce que l'organe d'actionnement en rotation (132) est monté, sur la tête de réduction (16), sur un côté (130) faisant face au guidage de poinçon (72).

4. Grignoteuse selon la revendication 2 ou 3, caractérisée en ce que l'arbre (140) est distant de l'axe du coulisseau (52) et orienté sensiblement parallèlement à celui-ci.

5. Grignoteuse selon la revendication 3 ou 4, caractérisée en ce que l'organe d'actionnement en rotation (132) est monté de manière concentrique à l'axe longitudinal (70) du poinçon (64).

6. Grignoteuse selon l'une des revendications précédentes, caractérisée en ce que l'organe intermédiaire (140) est guidé dans un perçage (142) du carter de machine (12, 16).

7. Grignoteuse selon l'une des revendications précédentes, caractérisée en ce que, entre l'organe d'actionnement en rotation (132) et l'organe intermédiaire (140), sont prévus des premiers éléments d'engrenage (136, 138) et en ce que, entre l'organe intermédiaire (140) et le guidage de poinçon (72), sont prévus des deuxièmes éléments d'engrenage (146, 148).

8. Grignoteuse selon la revendication 7, caractérisée en ce que les premiers et deuxièmes éléments d'engrenage (136, 138, 146, 148) provoquent ensemble une transmission 1:1.

9. Grignoteuse selon l'une des revendications précédentes, caractérisée en ce que le poinçon (64) est conçu pour la coupe dans une seule direction de coupe (164).

10. Grignoteuse selon la revendication 9, caractérisée en ce que le guidage de poinçon (72) guide le poinçon (64) en translation dans le sens de son axe longitudinal (70), tout en empêchant sa rotation par rapport à cet axe.

11. Grignoteuse selon la revendication 10, caractérisée en ce que le poinçon (64) présente une section transversale non circulaire.

12. Grignoteuse selon l'une des revendications 9 à 11, caractérisée en ce que le poinçon (64) est maintenu sur le coulisseau (48) dans un support rotatif (60).

13. Grignoteuse selon la revendication 12, caractérisée en ce que le poinçon (64) a du jeu, dans la direction de l'axe de coulisseau (52), par rapport au support rotatif (60).

14. Grignoteuse selon la revendication 12 ou 13, caractérisée en ce que le poinçon (64) présente un collet (66) et en ce que le support (60) est conçu de manière à entourer le collet (66).

15. Grignoteuse selon la revendication 14, caractérisée en ce que le support est un évidement (60) d'une pièce de palier (56) pouvant être fixée sur le coulisseau, et recevant le collet (66).

16. Grignoteuse selon l'une des revendications précédentes, caractérisée en ce que la matrice (80) est maintenue sur le guidage de poinçon (72) par un élément de support (86, 184).

17. Grignoteuse selon la revendication 16, caractérisée en ce que le guidage de poinçon (72) présente en tant qu'élément de support pour la matrice (80) une broche de support (86).

18. Grignoteuse selon la revendication 17, caractérisée en ce que la broche de support (86) constitue pour le poinçon (64) un guidage s'étendant dans la direction longitudinale (70) du poinçon (64).

19. Grignoteuse selon la revendication 17 ou 18, caractérisée en ce que le poinçon (64) et la broche de support (86) présentent en commun un contour extérieur sensiblement rond dans une zone de coupe (76) limitrophe de la matrice (80).

20. Grignoteuse selon l'une des revendications 17 à 19, caractérisée en ce que la broche de support (86) peut être introduite dans le guidage du poinçon (72).

21. Grignoteuse selon l'une des revendications 17 à 20, caractérisée en ce que la broche de support (86) présente une partie formant tête (116) pouvant être introduite dans le guidage de poinçon (72).

22. Grignoteuse selon l'une des revendications précédentes, caractérisée en ce que le guidage de poinçon (72) comprend une partie supérieure (94) pouvant être introduite dans un corps de base (93).

23. Grignoteuse selon la revendication 22, caractérisée en ce que la partie formant tête (116) de la broche de support (86) peut être fixée par la partie supérieure (94) dans le corps de base (93).

24. Grignoteuse selon la revendication 22 ou 23, caractérisée en ce que la partie supérieure (94) est conçue comme un élément (148) des deuxièmes éléments d'engrenage (146, 148).

25. Grignoteuse selon l'une des revendications 1 à 16, caractérisée en ce que l'élément support (184) est formé sur le guidage de poinçon (72).

26. Grignoteuse selon l'une des revendications précédentes, caractérisée en ce que l'entraînement oscillant présente un entraînement à bielle (38, 42).

27. Grignoteuse selon la revendication 26, caractérisée en ce que l'arbre (140) est monté du côté entraînement de l'entraînement à bielle (38, 42).

28. Grignoteuse selon l'une des revendications précédentes, caractérisée en ce que le guidage de poinçon (72) est immobilisé en rotation par un dispositif d'encliquetage (166, 168, 170).
